# EUROPEAN PATENT SPECIFICATION

(11) **EP 2 211 069 B1**
(45) Date of publication and mention of the grant of the patent: **24.10.2012**
(21) Application number: 10000597.4
(22) Date of filing: 21.01.2010
(51) Int. Cl.: F16D 48/06

(54) **Clutch control apparatus and method of controlling a clutch device**
Kupplungssteuerungsvorrichtung und Verfahren zur Steuerung einer Kupplungsvorrichtung
Appareil de commande d'embrayage et procédé de commande d'embrayage

(30) Priority: 21.01.2009 JP 2009011431
(43) Date of publication of application: 28.07.2010
(73) Proprietor: Yamaha Hatsudoki Kabushiki Kaisha, Shizuoka-ken Shizuoka 438-8501 (JP)
(72) Inventor: Zenno, Toru, Iwata-shi Shizuoka-ken 438-8501 (JP)
(74) Representative: Grünecker, Kinkeldey, Stockmair & Schwanhäusser

(56) References cited:
- DE-A1- 19 824 480
- DE-A1-102006 037 395
- GB-A- 2 093 618
- US-A1- 2002 111 732

## Description

The present invention relates to a clutch control apparatus and a method of controlling a clutch device.

Control apparatuses for vehicles in which actuators perform gear changing operations without riders operating clutches. For example, a clutch engagement control apparatus discussed in JP 2006-170225 A changes the engagement speed of a clutch by an actuator according to a change In difference between the rotational speed on the driving side of the clutch and the rotational speed on the driven side thereof. This causes the clutch to be smoothly engaged, resulting in an improvement in the ride quality of a rider of a vehicle.

However, only control by the clutch engagement control apparatus may cause the convenience of the rider to be reduced depending on the state of the vehicle.

The document DE 198 24 480 A1 discloses a clutch control apparatus for controlling a clutch. An actuator is provided in order to switch the clutch into an engaged state and a disengaged state. A control device controls the actuator in such a manner that in case a slip of the clutch exceeds a predetermined value during a predetermined time a so called *"snifting* cycle" is executed. After execution of the "*snifting cycle*" *a* normal operation is resumed.

The document DE 10 2006 037 395 A1 discloses a power train of a vehicle comprising an engine, a transmission and a clutch disposed between the engine and the transmission. A control means generates a quotient of rotation speeds of an input side and an output side of the clutch. Rotation speeds of shafts corresponding to a gear ratio of the transmission are compared to the above mentioned quotient and an undesired slip of the clutch is determined therefrom.

It is an objective of the present invention to provide a clutch control apparatus and a method of controlling a clutch device capable of overcoming the problems described above, so as to In particular improve the convenience of a rider of a vehicle equipped with the clutch control apparatus

According to the present invention, said objective is solved by a clutch control apparatus according to claim 1, and a method according to claim 11.

In the clutch control apparatus, when the clutch device is in the engaged state and the degree of noncoincidence between the rotational speed of the driving member and the rotational speed of the driven member is the predetermined first value or more, the control of the actuator device by the control member is stopped. This causes the engaged state of the clutch device to be maintained. When the degree of noncoincidence becomes less than the predetermined second value within the predetermined period of time elapsed since the control of the actuator device was stopped, the control of the actuator device by the control member is resumed.

When temporary sliding between plates in the clutch device occurs, therefore, the driving of the clutch device by the actuator device is resumed after the sliding between the plates is eliminated. When the temporary sliding between the plates in the clutch device occurs, therefore, the traveling of a vehicle equipped with the aforesaid clutch control apparatus can be continued. This results in an improvement in the convenience of a rider.

Preferably, a rotational speed detector is configured to detect a rotational speed of the engine of a vehicle, a traveling speed detector is configured to detect a traveling speed of the vehicle, and a gear position detector is configured to detect a gear position of a transmission capable of assuming a plurality of gear positions, wherein the control member is configured to calculate the rotational speed of the driving member based on the rotational speed of the engine detected by the rotational speed detector to calculate the rotational speed of the driven member based on the traveling speed of the vehicle detected by the traveling speed detector and the gear position detected by the gear position detector, and to calculate the degree of noncoincidence from the calculated rotational speed of the driving member and the calculated rotational speed of the driven member.

In this case, the rotational speed detector detects the rotational speed of the engine, and the traveling speed detector detects the traveling speed of the vehicle. The gear position detector detects the gear position of the transmission. The rotational speed of the driving member is calculated based on the detected rotational speed of the engine, the rotational speed of the driven member is calculated based on the detected traveling speed of the vehicle and the detected gear position, and the degree of noncoincidence is calculated from the respective calculated rotational speeds of the driving member and the driven member.

This enables the degree of noncoincidence between the rotational speed of the driving member and the rotational speed of the driven member to be easily calculated. The need of a sensor for directly detecting the rotational speed of the driven member is eliminated.

Preferably, the first value and the second value differ depending on the gear position of the transmission.

In this case, the control of the actuator device can be properly stopped and resumed according to the gear ratio between the gear positions of the transmission.

Preferably, an operating amount detector is configured to detect an operating amount of the actuator device, and, preferably, the control member is configured to determine whether or not the clutch device is in the engaged state based on the operating amount detected by the operating amount detector.

In this case, it can be accurately determined whether or not the clutch device is in the engaged state irrespective of the presence or absence of the sliding between the plates in the clutch device.

Preferably, the degree of noncoincidence is determined as difference between the rotational speed of the driving member and the rotational speed of the driven member, and the first and second values are respectively predetermined values of the difference between the rotational speeds of the driving member and the driven member.

In this case, the degree of noncoincidence between the rotational speed of the driving member and the rotational speed of the driven member can be determined by a simple operation.

Preferably, the degree of noncoincidence is determined as ratio of a difference between the rotational speed of the driving member and the rotational speed of the driven member the rotational speed of the driving member or the rotational speed of the driven member, and the first and second values are respectively predetermined values of the ratio of the difference between the rotational speeds of the driving member to the rotational speed of the driving member or the driven member.

In this case, the degree of noncoincidence between the rotational speed of the driving member and the rotational speed of the driven member can be determined by a simple operation.

Preferably, the first value and the second value are substantially identical.

In this case, the stop of the control of the actuator and the resumption of the control of the actuator are determined based on the same value. Therefore, a burden on the control member is reduced.

Preferably, a notifier is configured to make a notification that control of the actuator device by the control member is stopped, and, preferably, the notifier is configured to continue the notification even when control of the actuator device by the control member is not resumed.

In this case, the notifier makes the notification that the control of the actuator device by the control member is stopped, and the notification is also continued when the control of the actuator device by the control member is not resumed. This enables the rider of the vehicle to easily recognize the occurrence of the temporary sliding between the plates in the clutch device and the occurrence of a malfunction or the like between the engine and the power transmission mechanism.

Preferably, the notifier is configured to make a different notification when control of the actuator device by the control member is resumed within a predetermined period of time from when control of the actuator device by the control member is not resumed.

In this case, the rider of the vehicle can easily recognize whether the temporary sliding between the plates in the clutch device occurs or whether the malfunction or the like between the engine and the power transmission mechanism occurs based on the notification by the notifier.

There is also provided a vehicle comprising an engine, a clutch device including a driving member configured to rotate by a torque generated by the engine and a driven member configured to rotate according to the rotation of the driving member, and a clutch control apparatus according to any one of the above embodiments configured to control the clutch device.

In the vehicle, when the temporary sliding between the plates in the clutch device occurs, the driving of the clutch device by the actuator device is resumed after the sliding between the plates is eliminated. When the temporary sliding between the plates in the clutch device occurs, therefore, the traveling of the vehicle can be continued. This results in an improvement in the convenience of the rider.

Moreover, according to the present invention, the aforesaid objective is solved by a method of controlling a clutch device including a driving member configured to rotate by a torque generated by an engine and a driven member configured to rotate according to the rotation of the driving member, the method comprising the following steps: switching the clutch device into an engaged state and a disengaged state by means of an actuator device; and controlling the actuator device so as to stop control of the actuator device when the clutch device is in the engaged state and a degree of noncoincidence between the rotational speed of the driving member and the rotational speed of the driven member is a predetermined first value or more, and to resume control of the actuator device when the degree of noncoincidence becomes less than a predetermined second value within a predetermined period of time elapsed since control of the actuator device was stopped.

Preferably, the first value and the second value differ depending on a gear position of a transmission.

Further, preferably the degree of noncoincidence is determined as difference between the rotational speed of the driving member and the rotational speed of the driven member, and the first and second values are respectively predetermined values of the difference between the rotational speeds of the driving member and the driven member.

Still further, preferably the degree of noncoincidence is determined as ratio of a difference between the rotational speed of the driving member and the rotational speed of the driven member to the rotational speed of the driving member or the rotational speed of the driven member, and the first and second values are respectively predetermined values of the ratio of the difference between the rotational speeds of the driving member and the driven member to the rotational speed of the driving member or the driven member.

Yet further still, preferably the first value and the second value are substantially identical.

In the following, the present invention is explained in greater detail by means of embodiments thereof in conjunction with the accompanying drawings, wherein:
Fig. 1 is a side view of a motorcycle including a clutch control apparatus according to a preferred embodiment;
Fig. 2 is a cross-sectional view mainly illustrating the internal configuration of a power unit;
Fig. 3 is a block diagram mainly illustrating the configuration of the clutch control apparatus;
Fig. 4 is a schematic view illustrating an example of a display panel;
Fig. 5 is a flowchart illustrating clutch control processing by a CPU in an ECU; and
Fig. 6 illustrates a change in rotational speed between a driving member and a driven member, and upper-limit abnormality determination threshold value and a lower-limit abnormality determination threshold value.

Preferred embodiments will be now described in detail with reference to the drawings. A case where a clutch control apparatus is applied to a motorcycle serving as an example of a vehicle will be described below.

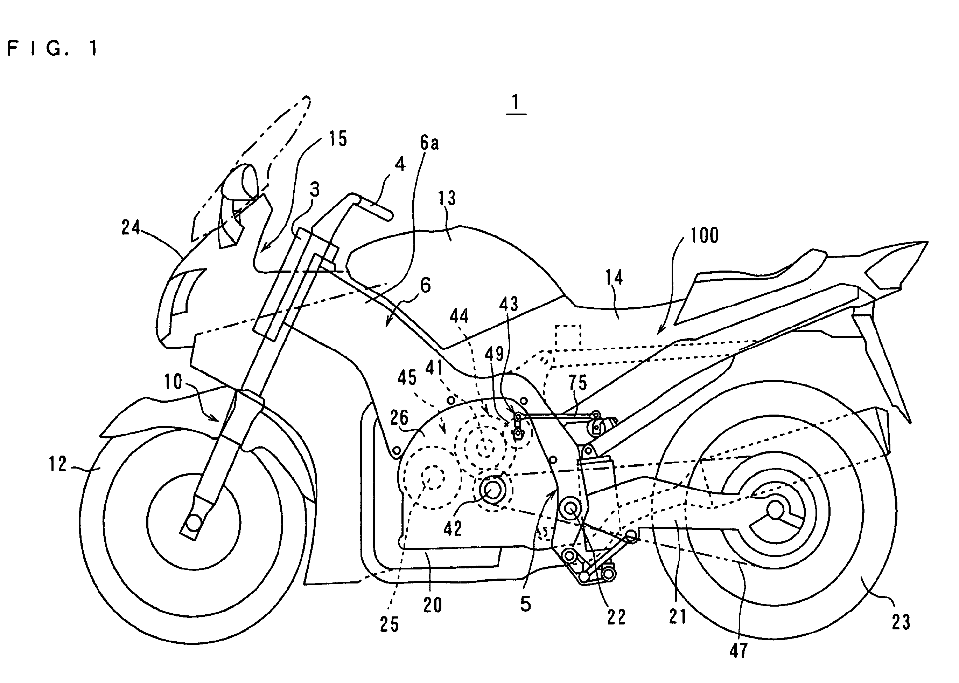

Fig. 1 is a side view of a motorcycle including a clutch control apparatus according to a preferred embodiment.

As illustrated in Fig. 1, a motorcycle (vehicle) 1 includes a vehicle body 100. The vehicle body 100 includes a head pipe 3 and a vehicle body frame 6. The vehicle body frame 6 includes a pair of right and left frame parts 6a extending backward from the head pipe 3. In Fig. 1, only the one frame part 6a is illustrated. The rear of the frame part 6a extends downward, and is connected to a rear arm bracket 5. A front end of a rear arm 21 is supported swingably up and down on the rear arm bracket 5 with a pivot shaft 22 sandwiched therebetween. A rear wheel 23 is supported at a rear end of the rear arm 21.

A front fork 10 is connected to the head pipe 3. A handle is provided at an upper end of the front fork 10, and a front wheel 12 is rotatably provided at a lower end of the front fork 10. A fuel tank 13 is arranged on the top of the frame part 6a, and a seat 14 is arranged behind the fuel tank 13.

A power unit 20 is attached to the frame part 6a and the rear arm bracket 5. The power unit 20 includes an engine 45, a clutch 44, and a transmission 43. The engine 45, the clutch 44, and the transmission 43 are integrally assembled in a crank case 26. The engine 45 has a crank shaft 25. The crank shaft 25 extends in a right-and-left direction.

In the present preferred embodiment, the engine 45 is an internal combustion engine using gasoline as a fuel.

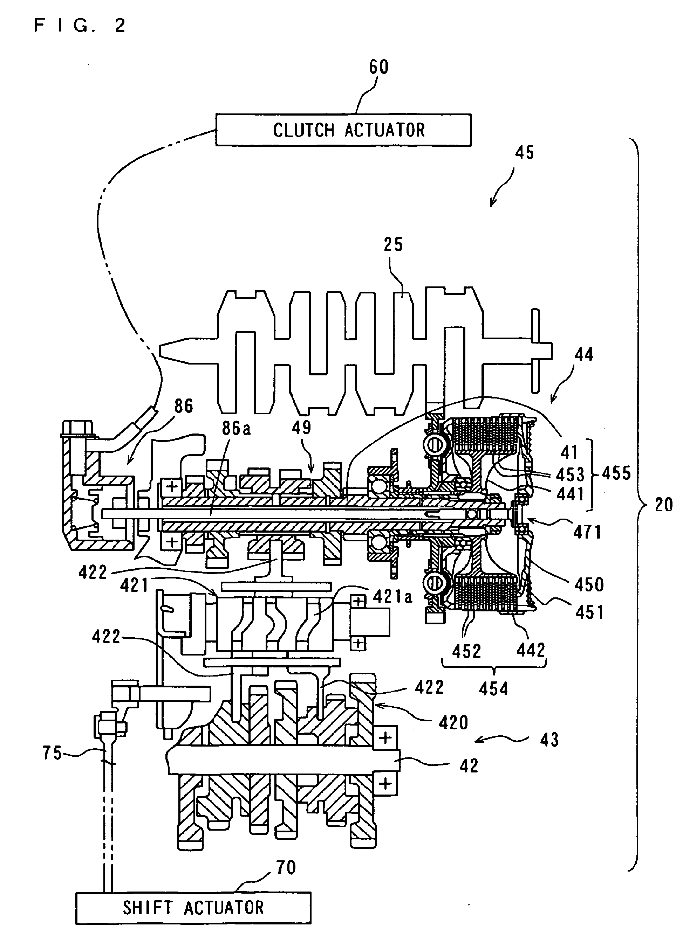

Fig. 2 is a cross-sectional view mainly illustrating the internal configuration of the power unit 20.

As illustrated in Fig. 2, the power unit 20 includes an engine 45, a clutch (clutch device) 44, and the transmission 43. Fig. 2 illustrates only a crank shaft 25 in the engine 45.

The crank shaft 25, a main shaft 41, and a drive shaft 42 extend parallel to one another. The main shaft 41 has a cylindrical shape. The clutch 44 connects the crank shaft 25 and the main shaft 41. A clutch actuator (actuator device) 60 switches the clutch 44 to an engaged state and a disengaged state. A shift actuator 70 switches (changes the gear positions of) transmission gears 49 and 420, described below, of the transmission 43. The engaged state and the disengaged state of the clutch 44 will be described below.

As illustrated in Fig. 2, the clutch 44 includes a clutch boss 441, a clutch housing 442, and a pressure plate 450. The clutch housing 442 is formed to surround the clutch boss 441. The main shaft 41 is rotatably attached to the clutch housing 442. The clutch boss 441 is fixed to the main shaft 41. Thus, the clutch boss 441, together with the main shaft 41, rotates.

A plurality of friction plates 452 is arranged inside the clutch housing 442 so as to line up in the axial direction of the main shaft 41. The plurality of friction plates 452 is fixed to the clutch housing 442 in the rotational direction of the main shaft 41. Therefore, the plurality of friction plates 452, together with the clutch housing 442, rotates. Each of the friction plates 452 is displaceable in the axial direction of the main shaft 41. This makes the distance between the adjacent friction plates 452 variable.

A clutch plate 453 is arranged between the adjacent friction plates 452. Each of the clutch plates 453 is opposed to the adjacent friction plate 452. Each of the clutch plates 453 is fixed to the clutch boss 441 in the rotational direction of the main shaft 41. Therefore, the plurality of clutch plates 453, together with the clutch boss 441, rotates. Each of the clutch plates 453 is displaceable in the axial direction of the main shaft 41. This makes the distance between the adjacent clutch plates 453 variable.

The rotation of the crank shaft 25 causes the clutch housing 442 to rotate. When the clutch 44 is in the engaged state, as described below, the friction plate 452 and the clutch plate 453 are pressed against each other. Therefore, the rotation of the crank shaft 25 is transmitted to the clutch boss 441 so that the clutch boss 441 rotates. In the present preferred embodiment, at least the clutch housing 442 and the friction plate 452 form a driving member 454 in the clutch 44. At least the clutch boss 441, the clutch plate 453, and the main shaft 41 form a driven member 455 in the clutch 44.

The pressure plate 450 has a substantially disk shape, and is arranged outside one end of the main shaft 41. The pressure plate 450 is attached to the clutch housing 442 such that the pressure plate 450, together with the clutch housing 442, rotates. The pressure plate 450 moves in the axial direction of the main shaft 41 so that the friction plate 452 and the clutch plate 453 come into contact with and separate from each other.

A belleville spring 451 having a substantially annular shape is interposed between the clutch housing 442 and the pressure plate 450. The belleville spring 451 urges the pressure plate 450 in the direction in which the friction plate 452 and the clutch plate 453 come into contact with each other. A push mechanism 471 is attached to the center of the pressure plate 450. A part of the push mechanism 471 is inserted into the main shaft 41.

The clutch 44 is provided with a clutch release mechanism 86. The clutch actuator 60 drives the clutch release mechanism 86. The clutch release mechanism 86 has a push rod 86a. The push rod 86a of the clutch release mechanism 86 is inserted into the main shaft 41.

When the clutch release mechanism 86 operates, the push rod 86a and the push mechanism 471 move nearer to the belleville spring 451. Thus, the pressure plate 450 moves outward (rightward in Fig. 2) against an urging force of the belleville spring 451. As a result, the friction plate 452 and the clutch plate 453 separate from each other so that the clutch 44 enters the disengaged state.

The engaged state of the clutch 44 means a state where the friction plate 452 and the clutch plate 453 in the clutch 44 come into contact with each other to integrally rotate. When the clutch 44 is in the engaged state, the friction plate 452 and the clutch plate 453 should rotate at an identical speed. When the clutch 44 is in the engaged state, the friction plate 452 and the clutch plate 453 can rotate while sliding from each other. This state is called "clutch sliding".

The disengaged state of the clutch 44 means a state where the friction plate 452 and the clutch plate 453 in the clutch 44 separate from each other. A state where the friction plate 452 and the clutch plate 453 rotate at different speeds is referred to as a half-clutched state. The half-clutched state differs from the clutch sliding with the clutch 44 engaged. The clutch 44 is shifted from the disengaged state to the engaged state via the half-clutched state.

The configuration of the transmission 43 will be then described. In the present preferred embodiment, the transmission 43 is a normally engaged dog transmission. The transmission 43 has a plurality of gear positions.

A plurality of transmission gears 49 is attached to the main shaft 41. A plurality of transmission gears 420 corresponding to the plurality of transmission gears 49 is attached to the drive shaft 42. Only the transmission gears 49 and 420, which form a pair, respectively selected out of the plurality of transmission gears 49 and the plurality of transmission gears 420 engage with each other. At least one of the unselected transmission gear 49 and the unselected transmission gear 420 is rotatable with respect to the main shaft 41 or the drive shaft 42. The transmission of the torque between the main shaft 41 and the drive shaft 42 is performed only via the selected pair of transmission gears 49 and 420.

A shift cam 421 selects the pair of transmission gears 49 and 420. A plurality of cam grooves 421 a is formed on an outer peripheral surface of the shift cam 421. A plurality of shift forks 422 is mounted on the plurality of cam grooves 421a. Each of the shift forks 422 engages with any of the transmission gears 49 of the main shaft 41 and any one of the transmission gears 420 of the drive shaft 42. The shift cam 421 rotates so that each of the plurality of shift forks 422 is guided by the cam groove 421a to move in the axial direction of the main shaft 41. Thus, the pair of transmission gears 49 and 420 that engage with each other is selected. In such a way, the gear position of the transmission 43 is determined.

The shift actuator 70 operates so that a shift rod 75 moves back and forth. The shift cam 421 rotates through a predetermined angle at a time by the reciprocating movement of the shift rod 75.

When the clutch 44 is in the engaged state, as described above, the torque generated by the engine 45 is transmitted to the main shaft 41 via the clutch 44. Furthermore, the torque transmitted to the main shaft 41 is transmitted to the drive shaft 42 via the selected pair of transmission gears 49 and 420, so that the drive shaft 42 rotates. In this case, the rotation is transmitted at a change gear ratio determined by a gear ratio of the selected pair of transmission gears 49 and 420. A power transmission mechanism 47 illustrated in Fig. 1 connects the drive shaft 42 to the rear wheel 23 illustrated in Fig. 1. The torque transmitted to the drive shaft 42 is transmitted to the rear wheel 23 via the power transmission mechanism 47 so that the rear wheel 23 rotates. The power transmission mechanism 47 may be a chain, a belt, or a drive shaft.

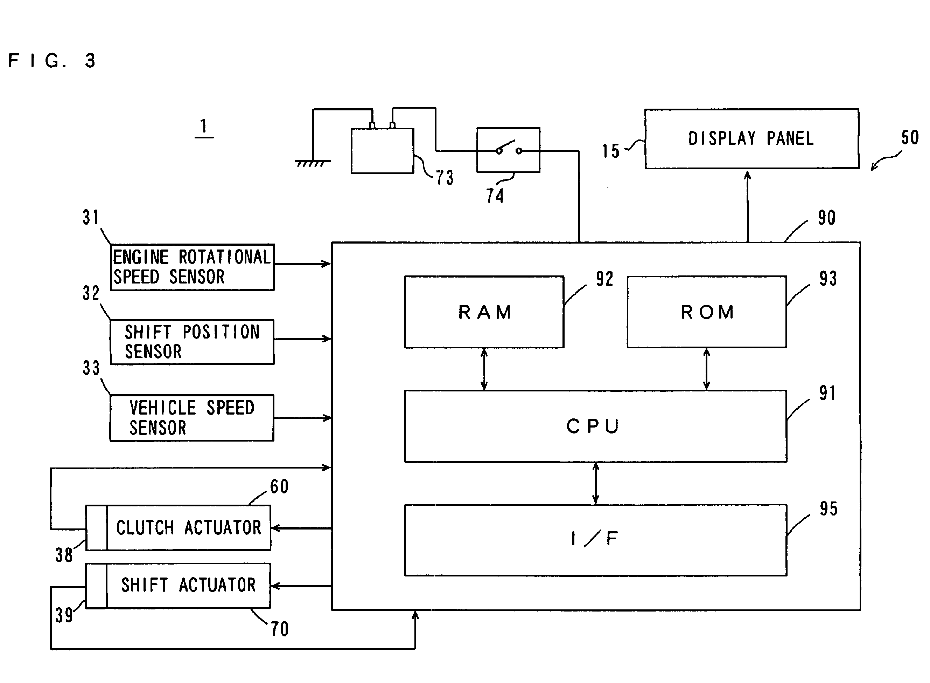

Fig. 3 is a block diagram mainly illustrating the configuration of a clutch control apparatus 50.

As illustrated in Fig. 3, the motorcycle 1 includes a display panel (notifier) 15, an electric control unit (ECU) (control member) 90, a power supply device 73, a main switch 74, an engine rotational speed sensor (rotational speed detector) 31, a shift position sensor (gear position detector) 32, and a vehicle speed sensor (traveling speed detector) 33.

The ECU 90 includes a central processing unit (CPU) 91, a random access memory (RAM) 92, a read-only memory (ROM) 93, and an interface circuit 95. When a driver turns the main switch 74 on, power is supplied from the power supply device 73 to the ECU 90 so that the ECU 90 is operable.

The motorcycle 1 may include a relay switch (not illustrated). In this case, a part of the ECU 90 can be operated even when the main switch 74 is not turned on.

The engine rotational speed sensor 31 is provided in the crank shaft 25 (Fig. 2), for example, to detect the rotational speed of the crank shaft 25. The shift position sensor 32 detects the rotation angle of the shift cam 421 (Fig. 2), to detect the gear position of the transmission 43. The vehicle speed sensor 33 detects the vehicle speed (traveling speed) of the motorcycle 1.

The sensors 31 to 33 may directly or indirectly detect a physical quantity to be detected. Alternatively, the sensors 31 to 33 may have an operating function, and may calculate a required physical quantity from the detected physical quantity.

The ECU 90 controls the clutch actuator 60 and the shift actuator 70. The clutch actuator 60 is provided with a potentiometer (operating amount detector) 38, and the shift actuator 70 is provided with a potentiometer 39. The potentiometer 38 detects the rotation angle of the clutch actuator 60, to detect the driving amount of the clutch actuator 60. The potentiometer 39 detects the rotation angle of the shift actuator 70, to detect the driving amount of the shift actuator 70.

In the present preferred embodiment, the display panel 15, the ECU 90, the engine rotational speed sensor 31, the shift position sensor 32, the vehicle speed sensor 33, the clutch actuator 60, and the potentiometer 38 constitute the clutch control apparatus 50.

The driving amount of the clutch actuator 60 in a case where the clutch 44 is shifted from the engaged state to the disengaged state and a case where the clutch 44 is shifted from the disengaged state to the engaged state is previously determined. Therefore, the ECU 90 can determine whether the clutch 44 is in the engaged state or the disengaged state based on the detected value of the potentiometer 38.

The ECU 90 controls the clutch actuator 60 and the shift actuator 70, to carry out transmission control. The transmission control means a series of control such as switching to the engaged state of the clutch 44, a change in the gear position of the transmission 43, and switching to the engaged state of the clutch 44.

The ECU 90 estimates the rotational speed of the driving member 454 in the clutch 44 based on the rotational speed of the engine 45 detected by the engine rotational speed sensor 31. The ECU 90 estimates the rotational speed of the driven member 455 from the rotational speed of a predetermined portion between the driven member 455 in the clutch 44 and the rear wheel 23. More specifically, the ECU 90 estimates the rotational speed of the driven member 455 based on the rotation angle of the shift cam 421 detected by the shift position sensor 32 and the vehicle speed detected by the vehicle speed sensor 33.

The ECU 90 performs clutch control processing, described below, based on the respective detected values of the engine rotational speed sensor 31, the shift position sensor 32, and the vehicle speed sensor 33 with the clutch 44 engaged.

A first example of control processing of the clutch actuator 60 (hereinafter referred to as clutch control processing) by the ECU 90 with the clutch 44 engaged will be hereinafter described.

### (a) Operation of ECU 90

The ECU 90 calculates a difference between the estimated rotational speed of the driving member 454 and the estimated rotational speed of the driven member 455. This causes the difference between the respective rotational speeds of the driving member 454 and the driven member 455 in the clutch 44 (hereinafter referred to as a rotational speed difference) to be detected. The rotational speed difference is a calculated value or an estimated value, and varies depending on the traveling state of the motorcycle 1. The rotational speed difference occurs when the clutch sliding occurs in at least the clutch 44.

The ECU 90 determines whether or not the rotational speed difference is a predetermined value or more. The predetermined value in this case is referred to as a stop rotational speed difference R₁. The stop rotational speed difference R₁ is stored in the RAM 92 or the ROM 93. The ECU 90 stops the control of the clutch actuator 60 when the clutch 44 is in the engaged state and the detected rotational speed difference is the stop rotational speed difference R₁ or more. Thus, the clutch actuator 60 maintains the clutch 44 in the engaged state. In this case, the ECU 90 does not accept an instruction to switch the clutch 44. As a result, the clutch 44 is maintained in the engaged state. Even when an instruction for transmission control is given, for example, the clutch 44 is maintained in the engaged state.

At this time, the ECU 90 may stop the control of the clutch actuator 60 while stopping the control of the shift actuator 70.

The ECU 90 determines whether or not the rotational speed difference is less than a predetermined value after stopping the control of the clutch actuator 60. The predetermined value in this case is referred to as a resumption rotational speed difference R₂. The resumption rotational speed difference R₂ is stored in the RAM 92 or the ROM 93. The ECU 90 resumes the control of the clutch actuator 60 when the rotational speed difference detected within the predetermined period of time becomes less than the resumption rotational speed difference R₂ after stopping the control of the clutch actuator 60. In this case, the ECU 90 accepts the instruction to switch the clutch 44. As a result, the ECU 90 controls the clutch actuator 60 in response to the instruction to switch the clutch 44. Even when the instruction for transmission control is given, for example, the clutch 44 is switched from the engaged state to the disengaged state.

The ECU 90 resumes the control of the clutch actuator 60 while resuming the control of the shift actuator 70 when stopping the control of the clutch actuator 60 while stopping the control of the shift actuator 70.

In this example, the stop rotational speed difference R₁ and the resumption rotational speed difference R₂ are set to a substantially identical value. The stop rotational speed difference R₁ and the resumption rotational speed difference R₂ may differ from each other.

If there is a malfunction or the like in the engine 45 or the power transmission mechanism 47, a rotational speed difference occurs between the driving member 454 and the driven member 455 in the clutch 44, although the clutch 44 is in the engaged state. In the case, the rider is notified that the rotational speed difference occurs between the driving member 454 and the driven member 455 with the clutch 44 engaged. Thus, the rider can stop the driving of the motorcycle 1 to check and maintain the motorcycle 1.

On the other hand, when temporary clutch sliding occurs, a temporary rotational speed difference occurs between the driving member 454 and the driven member 455 in the clutch 44 with the clutch 44 engaged. In this case, the rotation of the driven member 455 gradually follows the rotation of the driving member 454, so that the rotational speed difference becomes zero. When the rotational speed difference becomes less than the resumption rotational speed difference R₂ within a predetermined period of time elapsed since the rotational speed difference was the stop rotational speed difference R₁ or more, it can be determined that the clutch sliding has occurred.

The clutch 44 is in the half-clutched state, the friction plate 452 and the clutch plate 453 in the clutch 44 rotate relative to each other. Thus, a rotational speed difference occurs between the driving member 454 and the driven member 455. The clutch actuator 60 shifts the clutch 44 from the engaged state via the half-clutched state or shifts the clutch 44 from the disengaged state to the engaged state via the half-clutched state. Thus, the clutch 44 may enter the half-clutched state when the gear position of the transmission 43 is changed, i.e., when a shift change is made.

As described above, the ECU 90 stops the control of the clutch actuator 60 when the clutch 44 is in the engaged state and the rotational speed difference is the stop rotational speed difference R₁ or more, while not stopping the control of the actuator 67 when the clutch 44 is in the half-clutched state.

### (b) Notification by display panel 15

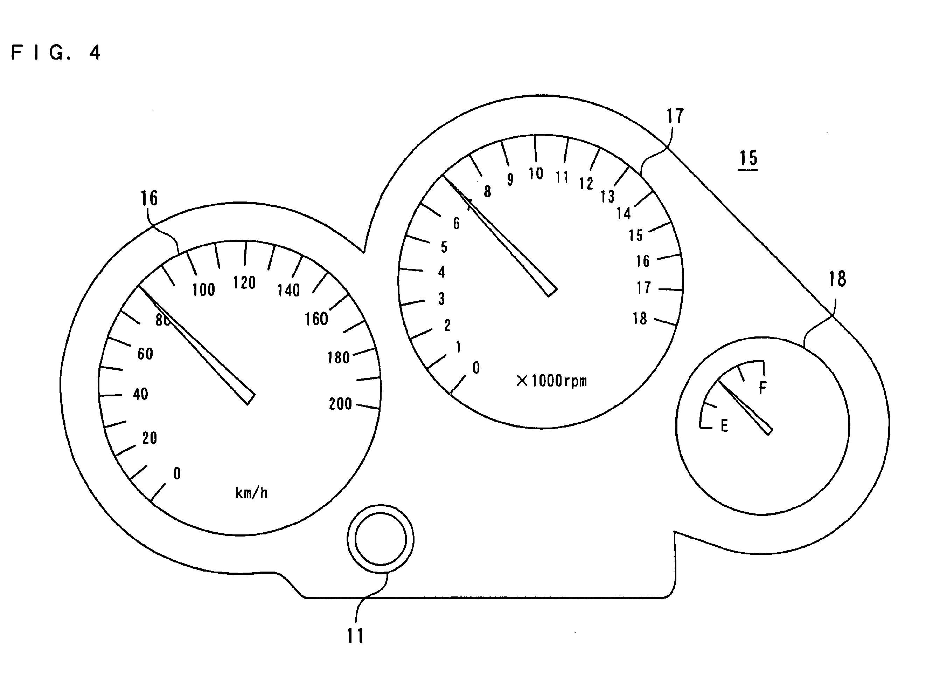

Fig. 4 is a schematic view illustrating the display panel 15. As illustrated in Fig. 4, the display panel 15 is provided with an indicating lamp 11, a speed meter 16, an engine tachometer 17, and a fuelometer 18.

As illustrated in Fig. 1, the display panel 15 is provided in the vehicle body 100 inside a front cowl 24. The rider can easily view the display panel 15 with the rider sitting on a seat 14. The configuration of the display panel 15 is not limited to the configuration illustrated in Fig. 4.

The ECU 90 flickers the indicating lamp 11 when the clutch 44 is in the engaged state and the rotational speed difference is the stop rotational speed difference R₁ or more. More specifically, the ECU 90 notifies the rider by flickering the indicating lamp 11 that the clutch 44 is in the engaged state and the rotational speed difference is the stop rotational speed difference R₁ or more. The ECU 90 continues to flicker the indicating lamp 11 even when the control of the clutch actuator 60 is not then resumed. This enables the rider of the motorcycle 1 to recognize that the temporary clutch sliding occurs or the malfunction or the like occurs in the engine 45 or the power transmission mechanism 47. When the control of the clutch actuator 60 is not resumed within a predetermined period of time, the rider can recognize that not the temporary clutch sliding but the malfunction or the like in the engine 45 or the power transmission mechanism 47 occurs.

### (c) Flow of clutch control processing by ECU 90

A clutch control processing program for performing clutch control processing is stored in the ROM 93 in the ECU 90. The CPU 91 in the ECU 90 executes the clutch control processing program, to perform the following clutch control processing.

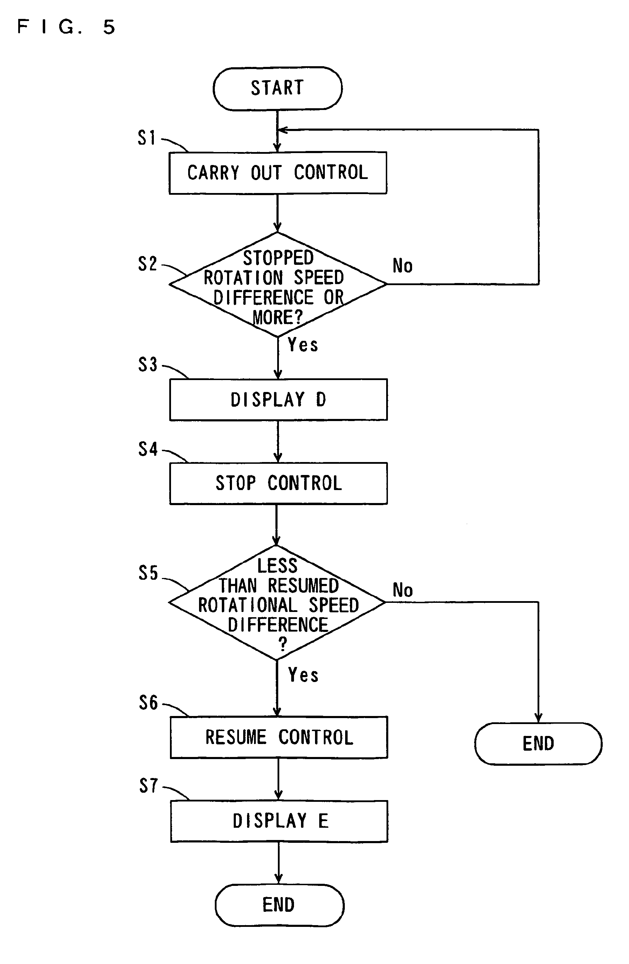

Fig. 5 is a flowchart illustrating clutch control processing by the CPU 91 in the ECU 90.

In step S1, the CPU 91 controls the actuator 67 with the clutch 44 engaged. In this case, the CPU 91 accepts an instruction to switch the clutch 44. When the rider turns a shift switch on, for example, the CPU 91 is given an instruction for transmission control. The instruction for transmission control is generated based on the driving state of the motorcycle 1. The driving state includes the vehicle speed of the motorcycle 1 and the operating state of the engine 45, for example, the vehicle speed and the accelerator opening of the motorcycle 1. The CPU 91 is shifted to the transmission control processing in response to the instruction for transmission control, to control the disengagement of the clutch 44 by the clutch actuator 60, the change in the gear position by the shift actuator 70, and the engagement of the clutch 44 by the clutch actuator 60. When the clutch 44 enters the engaged state, the CPU 91 is returned to step S1.

In step S2, the CPU 91 then determines whether or not the rotational speed difference is the stop rotational speed difference R₁ or more when the clutch 44 is in the engaged state. If the rotational speed difference is less than the stop rotational speed difference R₁ (No in step S2), the CPU 91 continues to control the clutch actuator 60.

If the rotational speed difference is the stop rotational speed difference R₁ or more (YES in step S2), then in step S3, the CPU 91 notifies the rider by flickering the indicating lamp 11 in the display panel 15 that the rotational speed difference becomes the stop rotational speed difference R₁ or more. In Fig. 5, the notification in this case is designated by a display D.

In step S4, the CPU 91 stops the control of the clutch actuator 60. This causes the clutch actuator 60 to maintain the clutch 44 in the engaged state. In this case, the CPU 91 does not accept the instruction to switch the clutch 44. Even when the instruction for transmission control is given or is generated, the clutch 44 is maintained in the engaged state.

The processing in step S3 and the processing in step S4 may be performed in the opposite order. Alternatively, the processing in step S3 and the processing in step S4 may be performed in parallel.

In step S5, the CPU 91 determines whether or not the rotational speed difference becomes less than the resumption rotational speed difference R₂ within a predetermined period of time elapsed since the rotational speed difference was the stop rotational speed difference R₁ or more.

If the rotational speed difference becomes less than the resumption rotational speed difference R₂ within the predetermined period of time (YES in step S5), it is determined that the temporary clutch sliding is eliminated after occurring. In step S6, the CPU 91 resumes the control of the clutch actuator 60. In step S7, the CPU 91 switches the indicating lamp 11 in the display panel 15 from flickering to lighting to notify the rider that the rotational speed difference becomes less than the resumption rotational speed difference R₂. In Fig. 5, the notification in this case is designated by a display E. In this case, the CPU 91 accepts the instruction to switch the clutch 44. The CPU 91 is shifted to the transmission control processing in response to the instruction for transmission control, for example, to control the disengagement of the clutch 44 by the clutch actuator 60, the change in the gear position by the shift actuator 70, and the engagement of the clutch 44 by the clutch actuator 60. When the clutch 44 enters the engaged state, the processing is returned to step S1.

Unless the rotational speed difference becomes less than the resumption rotational speed difference R₂ within the predetermined period of time (NO in step S5), it is determined that the malfunction or the like occurs in the engine 45 or the power transmission mechanism 47. The CPU 91 thus maintains the stop of the control of the clutch actuator 60. This causes the clutch actuator 60 to maintain the clutch 44 in the engaged state. In this case, the display D by the display panel 15 is continued. More specifically, the indicating lamp 11 continues to flicker.

Thus, the display panel 15 makes different notifications depending on whether the control of the clutch actuator 60 is resumed or not.

Alternatively, in this example, the ECU 90 calculates the ratio of the rotational speed difference to the rotational speed of the driven member 455 (hereinafter referred to as a rotational speed noncoincidence ratio). The rotational speed noncoincidence ratio is represented by an absolute value. The rotational speed noncoincidence ratio becomes zero or more when clutch sliding occurs in at least the clutch 44.

The ratio of the rotational speed difference to the rotational speed of the driving member 454 may be calculated as the rotational speed noncoincidence ratio.

In this example, the ECU 90 uses the rotational speed noncoincidence ratio in place of the rotational speed difference to determine the stop and the resumption of the control of the clutch actuator 60.

The ECU 90 determines whether or not the rotational speed noncoincidence ratio is a predetermined value or more. The predetermined value in this case is referred to as a stop noncoincidence ratio U₁. The stop noncoincidence ratio U₁ is stored in the RAM 92 or the ROM 93. The ECU 90 stops the control of the clutch actuator 60 when the clutch 44 is in the engaged state and the detected rotational speed noncoincidence ratio is the stop noncoincidence ratio U₁ or more.

The ECU 90 determines whether or not the rotational speed noncoincidence ratio is less than the predetermined value after stopping the control of the clutch actuator 60. The predetermined value in this case is referred to as a resumption noncoincidence ratio U₂. The resumption noncoincidence ratio U₂ is stored in the RAM 92 or the ROM 93. The ECU 90 resumes the control of the clutch actuator 60 when the rotational speed noncoincidence ratio detected within the predetermined period of time elapsed since the control of the clutch actuator 60 was stopped becomes less than the resumption noncoincidence ratio U₂.

In the present preferred embodiment, the stop noncoincidence ratio U₁ and the resumption noncoincidence ratio U₂ are respectively set to substantially identical values. The stop noncoincidence ratio U₁ and the resumption noncoincidence ratio U₂ may differ from each other.

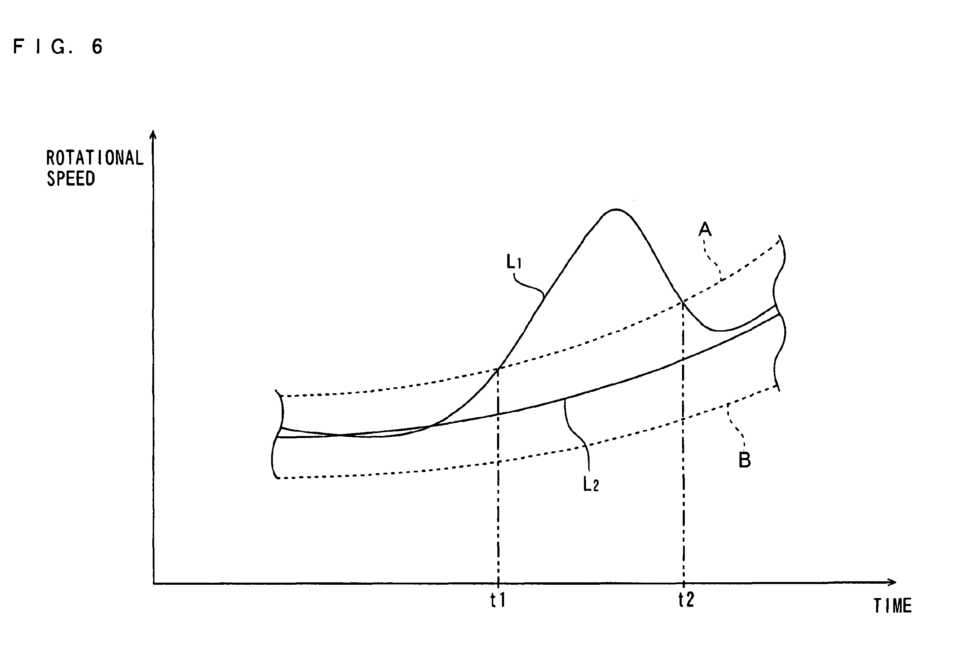

Fig. 6 is a diagram illustrating a change in rotational speed between the driving member 454 and the driven member 455, and an upper-limit abnormality determination threshold value and a lower-limit abnormality determination threshold value.

In Fig. 6, a curve L₁ represents the change in the rotational speed of the driving member 454, and a curve L₂ represents the change in the rotational speed of the driven member 455. In this example, the upper-limit abnormality determination threshold value A and the lower-limit abnormality determination threshold value B are defined by the stop noncoincidence ratio U₁ and the resumption noncoincidence ratio U₂.

When the stop noncoincidence ratio U₁ and the resumption noncoincidence ratio U₂ are 0.1 (= 10%), for example, the upper-limit abnormality determination threshold value A is set to 1.1 times the rotational speed of the driven member 455, and the lower-limit abnormality determination threshold value B is set to 0.9 times the rotational speed of the driven member 455. In this case, when the rotational speed of the driving member 454 is 1.1 times or more the rotational speed of the driven member 455 (the upper-limit abnormality determination threshold value A or more), or is 0.9 times or less the rotational speed of the driven member 455 (the lower-limit abnormality determination threshold value B or less), the ECU 90 stops the control of the clutch actuator 60.

When the rotational speed of the driving member 454 is less than 1.1 times the rotational speed of the driven member 455 (less than the upper-limit abnormality determination threshold value A), or is 0.9 times or more the rotational speed of the driven member 455 (at least the lower-limit abnormality determination threshold value B), the ECU 90 resumes the control of the clutch actuator 60.

The rotational speed noncoincidence ratio for setting the upper-limit abnormality determination threshold value A and the rotational speed noncoincidence ratio for setting the lower-limit abnormality determination threshold value B may be identical to or different from each other.

The upper-limit abnormality determination threshold value A may be set to 1.2 times the rotational speed of the driven member 455, and the lower-limit abnormality determination threshold value B may be set to 0.9 times the rotational speed of the driven member 455.

In the example illustrated in Fig. 6, the rotational speed of the driving member 454 is the upper-limit abnormality determination threshold value A or more at a time point t₁, and the rotational speed of the driving member 454 is less than the upper-limit abnormality determination threshold value A at a time point t₂. In this case, the ECU 90 stops the control of the clutch actuator 60 at the time point t₁, and resumes the control of the clutch actuator 60 at the time point t₂.

As described above, in the clutch control apparatus 50 according to the present preferred embodiment, the control of the clutch actuator 60 by the ECU 60 is stopped when the clutch 44 is in the engaged state and the rotational speed difference between the respective rotational speeds of the driving member 454 and the driven member 455 is the stop rotational speed difference R₁ or more or the rotational speed noncoincidence ratio is the stop noncoincidence ratio U₁ or more. This causes the engaged state of the clutch 44 to be maintained.

When the temporary clutch sliding occurs, the rotational speed difference occurs between the driving member 454 and the driven member 455. In this case, the rotation of the driven member 455 gradually follows the rotation of the driving member 454, so that the rotational speed difference is eliminated within the predetermined period of time. Therefore, the control of the clutch actuator 60 by the ECU 90 is resumed when the rotational speed difference becomes less than the resumption rotational speed difference R₂ or the rotational speed noncoincidence ratio becomes less than the resumption noncoincidence ratio U₂ within the predetermined period of time elapsed since the control of the clutch actuator 60 was stopped. More specifically, the driving of the clutch 44 by the clutch actuator 60 is resumed after the temporary clutch sliding is eliminated. Therefore, the traveling of the motorcycle 1 can be continued when the temporary clutch sliding occurs.

On the other hand, when the malfunction or the like occurs in the engine 45 or the power transmission mechanism 47, the rotational speed difference occurs between the driving member 454 and the driven member 455. In this case, the rotational speed difference is not eliminated within the predetermined period of time. After the control of the clutch actuator 60 is stopped, therefore, the control of the clutch actuator 60 by the ECU 90 is not resumed. Thus, the traveling of the motorcycle 1 cannot be continued. This enables the rider to check and maintain the motorcycle 1.

When the temporary clutch sliding thus occurs, the rider can continue the driving of the motorcycle 1. This results in an improvement in the convenience of the rider.

The rotational speed of the driving member 454 is calculated based on the rotational speed of the engine 45 detected by the engine rotational speed sensor 31, the rotational speed of the driven member 455 is calculated based on the traveling speed of the motorcycle 1 detected by the vehicle speed sensor 33 and the gear position of the transmission 43 detected by the shift position sensor 32, and the rotational speed difference or the rotational speed noncoincidence ratio is calculated from the calculated rotational speed of the driving member 454 and the calculated rotational speed of the driven member 455. This enables the rotational speed difference or the rotational speed noncoincidence ratio to be easily calculated. The need of a sensor for directly detecting the rotational speed of the driven member 455 is eliminated.

Furthermore, the potentiometer 38 detects the driving amount of the clutch actuator 60, and the ECU 90 determines whether or not the clutch 44 is in the engaged state based on the detected driving amount. This enables accurate determination whether or not the clutch 44 is in the engaged state irrespective of the presence or absence of the clutch sliding.

The rotational speed difference or the rotational speed noncoincidence ratio is calculated as the degree of noncoincidence between the rotational speed of the driving member 454 and the rotational speed of the driven member 455. This enables the degree of noncoincidence between the rotational speed of the driving member 454 and the rotational speed of the driven member 455 to be determined by a simple operation.

When the stop rotational speed difference R₁ and the resumption rotational speed difference R₂ are the same, or when the stop noncoincidence ratio U₁ and the resumption noncoincidence ratio U₂ are the same, the stop and the resumption of the control of the clutch actuator 60 are determined based on the same value. This makes the processing by the ECU 90 easy so that the burden on the ECU 90 is reduced.

Furthermore, the notification that the control of the clutch actuator 60 is stopped is made by the display panel 15, and is also continued when the control of the clutch actuator 60 by the ECU 90 is not resumed. This enables the rider of the motorcycle 1 to easily recognize the occurrence of the temporary clutch sliding and the occurrence of the malfunction or the like in the engine 45 or the power transmission mechanism 47.

When the control of the clutch actuator 60 by the ECU 90 is resumed within the predetermined period of time, the display panel 15 makes a different notification from when the control of the clutch actuator 60 by the ECU 90 is not resumed. This enables the rider of the motorcycle 1 to easily recognize whether or not the temporary clutch sliding occurs or whether or not the malfunctions or the like occur in the engine 45 and the power transmission mechanism 47 based on the notification by the display panel 15.

In the motorcycle 1 including the clutch control apparatus 50 according to the present preferred embodiment, when the temporary clutch sliding occurs, the driving of the clutch 44 by the clutch actuator 60 is resumed after the clutch sliding is eliminated. Therefore, the traveling of the motorcycle 1 can be continued when the temporary clutch sliding occurs. This results in an improvement in the convenience of the rider.

Alternatively or additionally to the above, the following clutch control may be provided:
(a) The stop rotational speed difference R₁ and the resumption rotational speed difference R₂ may be determined to differ depending on the gear position of the transmission 43. The stop noncoincidence ratio U₁ and the resumption noncoincidence ratio U₂ may be determined to differ depending on the gear position of the transmission 43. The gear position of the transmission 43 is determined based on the detected value of the shift position sensor 32. In this case, the ECU 90 can properly stop and resume the control of the clutch actuator 60 according to the gear ratio in each of the gear positions of the transmission 43.
(b) The clutch 44 is not limited to a wet multiple disk friction clutch. It may be a dry multiple disk friction clutch or a single disk clutch. Alternatively, the clutch 44 may be a clutch including a centrifugal weight (a centrifugal clutch).
(c) Although in the above-mentioned preferred embodiment, the clutch device is composed of a single clutch 44, the clutch device may be composed of a plurality of clutches.
(d) The transmission 43 is not limited to a stage transmission. It may be a non-stage transmission having a belt.
(e) A transmission path of a torque generated by the engine 45 within the power unit 20 is not limited to the transmission path in the above-mentioned preferred embodiment. For example, the clutch 44 may be arranged on the downstream side of the transmission 43 in a torque transmission direction. In this case, the rotation of the main shaft 41 is transmitted to the drive shaft 42 at a predetermined change gear ratio by the transmission 43, and the rotation of the drive shaft 42 is transmitted to the power transmission mechanism 47 (see Fig. 1) via the clutch 44.
   In this case, the ECU 90 can estimate the rotational speed of the driving member 454 based on the rotational speed detected by the engine rotational speed sensor 31 and the gear position detected by the shift position sensor 32. The ECU 90 can estimate the rotational speed of the driven member 455 based on the vehicle speed detected by the vehicle speed sensor 33.
(f) A sensor for directly detecting the rotational speed of the driving member 454 may be provided. In this case, the rotational speed of the friction plate 452 or the clutch housing 442 in the clutch 44 is directly detected. As described above, the clutch plate 453 and the clutch boss 441, together with the main shaft 41, rotate. Therefore, the rotational speed of the clutch plate 453 or the clutch boss 441 can be directly detected by detecting the rotational speed of the main shaft 41.

A sensor for directly detecting the rotational speed of the driven member 455 may be provided. In this case, the rotational speed of the clutch plate 453 or the clutch boss 441 in the clutch 44 is directly detected.

When the sensor for directly detecting the rotational speed of the driving member 454 and the sensor for directly detecting the rotational speed of the driven member 455 are provided, a rotational speed difference or a rotational speed noncoincidence ratio is calculated based on the respective detected values of the two sensors.
(g) Although in the above-mentioned preferred embodiment, the driving force of the clutch release mechanism 86 is transmitted to the pressure plate 450 via the inside of the main shaft 41, the present teaching is not limited to the configuration. For example, the clutch 44 may be provided with another moving mechanism that moves the push mechanism 471 outward (rightward in Fig. 2) against the urging force of the belleville spring 451. At least respective parts of the moving mechanism and the clutch release mechanism 86 are provided outside the pressure plate 450. In this case, the push mechanism 471 is connected to the clutch release mechanism 86 via the moving mechanism. When the clutch actuator 60 operates, the push mechanism 471 is pulled outward (rightward in Fig. 2) by the moving mechanism. Thus, the push mechanism 471 moves against the urging force of the belleville spring 451 so that the clutch 44 enters a disengaged state.
(h) Although in the above-mentioned preferred embodiment, the actuator device is composed of the clutch actuator 60 and the shift actuator 70 that are separate from each other, the actuator device may be composed of a single actuator that switches the clutch 44 and switches the transmission gears 49 and 420 in the transmission 43.

In this case, the potentiometers 38 and 39 may be replaced with a single potentiometer.
(i) A voice output device may be provided in place of or in addition to the display panel 15 to notify the stop and the resumption of the control of the clutch actuator 60 by the ECU 90. In this case, the ECU 90 controls the voice output device such that a voice is outputted when the clutch 44 is in the engaged state and the rotational speed difference between the respective rotational speeds of the driving member 454 and the driven member 455 is the stop rotational speed difference R₁ or more or the rotational speed noncoincidence ratio is the stop noncoincidence ratio U₁ or more, and such that a voice is outputted when the clutch 44 is in the engaged state and the rotational speed difference between the respective rotational speeds of the driving member 454 and the driven member 455 is less the stop rotational speed difference R₁ or the rotational speed noncoincidence ratio is less the stop noncoincidence ratio U₁. In Fig. 5, the notification in this case is designated by a display E.
(j) Although in the above-mentioned preferred embodiment, the clutch control apparatus 50 is applied to the motorcycle 1 illustrated in Fig. 1 as an example of the vehicle, the clutch control apparatus 50 is similarly applicable to a motorcycle such as a scooter motorcycle, an off load motorcycle, or a racer replica motorcycle. The clutch control apparatus 50 is not limited to the motorcycle. For example, it is similarly applicable to other vehicles such as motor three-wheelers, motor four-wheelers, an all terrain vehicle (ATV), or a snowmobile.
(k) Although in the above-mentioned preferred embodiment, the function of the control member is realized by the CPU 91 in the ECU 90 and the clutch control program, the function of the control member may be realized by hardware such as an electronic circuit. In this case, a rotational speed difference detector that detects a rotational speed difference or a rotational speed noncoincidence ratio, an actuator control unit that controls the clutch actuator 60, a control stop unit that stops the control of the clutch actuator 60 by the actuator control unit, a control resumption unit that resumes the control of the clutch actuator 60 by the actuator control unit, and a notification control unit that controls a notification by the display panel 15 may be respectively composed of separate electronic circuits or a common electronic circuit.

In the following two paragraphs, non-limiting examples of correspondences between various elements recited in the claims below and those described above with respect to various preferred embodiments are explained.

In the preferred embodiments described above, the motorcycle 1 is an example of a vehicle, the clutch control apparatus 50 is an example of a clutch control apparatus, the engine 45 is an example of an engine, the clutch 44 is an example of a clutch device, the driving member 454 is an example of a driving member, the driven member 455 is an example of a driven member, the clutch actuator 60 is an example of an actuator device, and the ECU 90 is an example of a control member.

The engine rotational speed sensor 31 is an example of a rotational speed detector, the vehicle speed sensor 33 is an example of a traveling speed detector, the shift position sensor 32 is an example of a gear position detector, the potentiometer 38 is an example of an operating amount detector, and the display panel 15 is an example of a notifier.

Furthermore, the rotational speed difference or the rotational speed noncoincidence ratio is an example of the degree of noncoincidence, the stop rotational speed difference R₁ or the stop noncoincidence ratio U₁ is an example of a first value, and the resumption rotational speed difference R₂ or the resumption noncoincidence ratio U₂ is an example of a second value.

To sum up the above, the embodiment of a clutch control apparatus is provided in a vehicle including a clutch. The clutch control apparatus includes a clutch actuator and an ECU. The ECU stops the control of the clutch actuator when the clutch is in an engaged state and a difference between the respective rotational speeds of a driving member and a driven member in the clutch is a predetermined value or more, while resuming the control of the clutch actuator when the difference between the rotational speeds becomes less than the predetermined value within a predetermined period of time elapsed since the control of the clutch actuator was stopped.

## Claims

1. Clutch control apparatus for controlling a clutch device (44) including a driving member (454) configured to rotate by a torque generated by an engine (45) and a driven member (455) configured to rotate according to the rotation of the driving member (454), the clutch control apparatus (50) comprising:
an actuator device (60) configured to switch the clutch device (44) into an engaged state and a disengaged state; and
a control member (90) configured to control the actuator device (60) such that the actuator device (60) accepts an instruction to switch the clutch device (44), switches the clutch device (44) from the engaged state to the disengaged state and then switches the clutch device (44) from the disengaged state to the engaged state, wherein the control member (90) is configured to determine whether a degree of noncoincidence between the rotational speed of the driving member (454) and the rotational speed of the driven member (455) is a predetermined first value (R₁, U₁) or more when the clutch device (44) is in the engaged state, and to stop control of the actuator device (60) so that the clutch device (44) is maintained in the engaged state irrespective of the instruction to switch the clutch device (44) when determining the degree of noncoincidence between the rotational speed of the driving member (454) and the rotational speed of the driven member (455) is the predetermined first value (R₁, U₁) or more, and to resume control of the actuator device (60) that responds to the instruction to switch the clutch device (44) when determining the degree of noncoincidence becomes less than a predetermined second value (R₂,U₂) within a predetermined period of time (t₂ -t₁) elapsed since control of the actuator device (60) was stopped.

2. Clutch control apparatus according to claim 1, wherein a rotational speed detector (31) is configured to detect a rotational speed of the engine (45) of a vehicle (1), a traveling speed detector (33) is configured to detect a traveling speed of the vehicle (1), and a gear position detector (32) is configured to detect a gear position of a transmission (43) capable of assuming a plurality of gear positions, wherein the control member (90) is configured to calculate the rotational speed of the driving member (454) based on the rotational speed of the engine (45) detected by the rotational speed detector (31), to calculate the rotational speed of the driven member (455) based on the traveling speed of the vehicle (1) detected by the traveling speed detector (33) and the gear position detected by the gear position detector (32), and to calculate the degree of noncoincidence from the calculated rotational speed of the driving member (454) and the calculated rotational speed of the driven member (455).

3. Clutch control apparatus according to claim 2, wherein the first value (R₁, U₁) and the second value (R₂,U₂) differ depending on the gear position of the transmission (43).

4. Clutch control apparatus according to any one of claims 1 to 3, wherein an operating amount detector (38) is configured to detect an operating amount of the actuator device (60), and, preferably, the control member (90) is configured to determine whether or not the clutch device (44) is in the engaged state based on the operating amount detected by the operating amount detector (38).

5. Clutch control apparatus according to any one of claims 1 to 4, wherein the degree of noncoincidence is determined as difference between the rotational speed of the driving member (454) and the rotational speed of the driven member (455), and the first and second values (R₁,R₂) are respectively predetermined values of the difference between the rotational speeds of the driving member (454) and the driven member (455).

6. Clutch control apparatus according to any one of claims 1 to 4, wherein the degree of noncoincidence is determined as ratio of a difference between the rotational speed of the driving member (454) and the rotational speed of the driven member (455) to the rotational speed of the driving member (454) or the rotational speed of the driven member (455), and the first and second values (U₁,U₂) are respectively predetermined values of the ratio of the difference between the rotational speeds of the driving member (454) and the driven member (455) to the rotational speed of the driving member (454) or the driven member (455).

7. Clutch control apparatus according to any one of claims 1 to 6, wherein the first value (R₁, U₁) and the second value (R₂,U₂) are substantially identical.

8. Clutch control apparatus according to any one of claims 1 to 7, wherein a notifier (15) is configured to make a notification that control of the actuator device (60) by the control member (90) is stopped, and, preferably, the notifier (15) is configured to continue the notification even when control of the actuator device (60) by the control member (90) is not resumed.

9. Clutch control apparatus according to claim 8, wherein the notifier (15) is configured to make a different notification when control of the actuator device (60) by the control member (90) is resumed within a predetermined period of time from when control of the actuator device (60) by the control member (90) is not resumed.

10. Vehicle comprising an engine (45), a clutch device (44) including a driving member (454) configured to rotate by a torque generated by the engine (45) and a driven member (455) configured to rotate according to the rotation of the driving member (454), and a clutch control apparatus (50) according to any one of claims 1 to 9 configured to control the clutch device (44).

11. Method of controlling a clutch device (44) including a driving member (454) configured to rotate by a torque generated by an engine (45) and a driven member (455) configured to rotate according to the rotation of the driving member (454), the method comprising the following steps:
switching the clutch device (44) into an engaged state and a disengaged state by means of an actuator device (60); and
controlling the actuator device (60) such that the actuator device (60) accepts an instruction to switch the clutch device (44), switches the clutch device (44) from the engaged state to the disengaged state and then switches the clutch device (44) from the disengaged state to the engaged state, determining whether a degree of noncoincidence between the rotational speed of the driving member (454) and the rotational speed of the driven member (455) is a predetermined first value (R₁, U₁) or more when the clutch device (44) is in the engaged state, and stopping control of the actuator device (60) so that the clutch device (44) is maintained in the engaged state irrespective of the instruction to switch the clutch device (44) when determining the degree of noncoincidence between the rotational speed of the driving member (454) and the rotational speed of the driven member (455) is the predetermined first value (R₁, U₁) or more, and resuming control of the actuator device (60) that responds to the instruction to switch the clutch device (44) when determining the degree of noncoincidence becomes less than a predetermined second value (R₂.U₂) within a predetermined period of time (t₂ - t₁) elapsed since control of the actuator device (60) was stopped.

12. Method according to claim 11, wherein the first value (R₁, U₁) and the second value (R₂,U₂) differ depending on a gear position of a transmission (43).

13. Method according to claim 11 or 12, wherein the degree of noncoincidence is determined as difference between the rotational speed of the driving member (454) and the rotational speed of the driven member (455), and the first and second values (R₁,R₂) are respectively predetermined values of the difference between the rotational speeds of the driving member (454) and the driven member (455).

14. Method according to claim 11 or 12, wherein the degree of noncoincidence is determined as ratio of a difference between the rotational speed of the driving member (454) and the rotational speed of the driven member (455) to the rotational speed of the driving member (454) or the rotational speed of the driven member (455), and the first and second values (U₁,U₂) are respectively predetermined values of the ratio of the difference between the rotational speeds of the driving member (454) and the driven member (455) to the rotational speed of the driving member (454) or the driven member (455).

15. Method according to any one of claims 11 to 14, wherein the first value (R₁, U₁ and the second value (R₂, U₂) are substantially identical.

## Patentansprüche

1. Kupplungssteuerungsvorrichtung zum Steuern einer Kupplungsvorrichtung (44), enthaltend ein Antriebsteil (454), konfiguriert, sich durch ein Drehmoment, erzeugt durch eine Brennkraftmaschine (45), zu drehen, und ein Abtriebsteil (455), konfiguriert, sich entsprechend zu der Drehung des Antriebsteils (454) zu drehen, wobei die Kupplungssteuerungsvorrichtung aufweist:
eine Betätigervorrichtung (60), konfiguriert, die Kupplungsvorrichtung (44) in einen Eingriffszustand oder einen Nicht- Eingriffszustand zu schalten; und
ein Steuerteil (90), konfiguriert, die Betätigervorrichtung (60) derart zu schalten, dass die Betätigervorrichtung (60) ein Anweisung akzeptiert, die Kupplungsvorrichtung (44) zu schalten, die Kupplungsvorrichtung (44) aus dem Eingriffszustand in den Nicht- Eingriffszustand schaltet und dann die Kupplungsvorrichtung (44) aus dem Nicht- Eingriffszustand in den Eingriffszustand schaltet, wobei das Steuerteil (90) konfiguriert ist, festzustellen, ob ein Grad der Nichtübereinstimmung zwischen der Drehzahl des Antriebsteils (454) und der Drehzahl des Abtriebsteils (455) ein erster vorbestimmter Wert (R₁, U₁) oder größer ist, wenn die Kupplungsvorrichtung (44) in dem Eingriffszustand ist, und um die Steuerung der Betätigervorrichtung (60) zu stoppen, so dass die Kupplungsvorrichtung (44) in dem Eingriffszustand unabhängig von der Anweisung, die Kupplungsvorrichtung (44) zu schalten, beibehalten wird, wenn der Grad der Nichtübereinstimmung zwischen der Drehzahl des Antriebsteils (454) und der Drehzahl des Abtriebsteils (455) der vorbestimmte erste Wert (R₁, U₁) oder größer ist, und um die Steuerung der Betätigervorrichtung (60), die auf die Anweisung Schalten der Kupplungsvorrichtung (44) antwortet, wieder aufzunehmen, wenn festgestellt wird, dass der Grad der Nichtübereinstimmung kleiner als ein zweiter vorbestimmter Wert (R₂, U₂) innerhalb einer vorbestimmten Zeitdauer (t₂ -t₁) wird, vergangen seitdem die Steuerung der Betätigervorrichtung (60) gestoppt wurde.

2. Kupplungssteuerungsvorrichtung nach Anspruch 1, wobei ein Drehzahlerfasser (31) konfiguriert ist, eine Drehzahl der Brennkraftmaschine (45) eines Fahrzeuges (1) zu erfassen, ein Fahrgeschwindigkeitserfasser (33) konfiguriert ist, eine Fahrgeschwindigkeit des Fahrzeuges (1) zu erfassen und ein Gangpositionserfasser (32) konfiguriert ist, eine Gangposition eines Getriebes (43), das in der Lage ist, eine Mehrzahl von Gangpositionen einzunehmen, zu erfassen, wobei das Steuerteil (90) konfiguriert ist, die Drehzahl des Antriebsteils (454) auf der Grundlage der Drehzahl der Brennkraftmaschine (45), erfasst durch den Drehzahlerfasser (31), zu berechnen, die Drehzahl des Abtriebsteils (455) auf der Grundlage der Fahrgeschwindigkeit des Fahrzeuges (1), erfasst durch den Fahrgeschwindigkeitserfasser (33), und die Gangposition, erfasst durch den Gangpositionserfasser (32), zu berechnen und den Grad der Nichtübereinstimmung von der berechneten Drehzahl des Antriebsteils (454) und der berechneten Drehzahl des Abtriebsteils (455) zu berechnen.

3. Kupplungssteuerungsvorrichtung nach Anspruch 2, wobei der erste Wert (R₁, U₁) und der zweite Wert (R₂, U₂) in Abhängigkeit von der Gangposition des Getriebes (43) verschieden sind.

4. Kupplungssteuerungsvorrichtung nach einem der Ansprüche 1 bis 3, wobei ein Betätigungsgrößenerfasser (38) konfiguriert ist, eine Betätigungsgröße der Betätigervorrichtung (60) zu erfassen und, vorzugsweise, das Steuerteil (90) konfiguriert ist, festzustellen, ob die Kupplungsvorrichtung (44) in dem Eingriffszustand ist auf der Grundlage der Betätigungsgröße, erfasst durch den Betätigungsgrößenerfasser (38), oder nicht.

5. Kupplungssteuerungsvorrichtung nach einem der Ansprüche 1 bis 4, wobei der Grad der Nichtübereinstimmung als eine Differenz zwischen der Drehzahl des Antriebsteils (454) und der Drehzahl des Abtriebsteils (455) bestimmt wird und der erste und zweite Wert (R₁, R₂) jeweils vorbestimmte Werte der Differenz zwischen den Drehzahlen des Antriebsteils (454) und des Abtriebsteils (455) sind.

6. Kupplungssteuerungsvorrichtung nach einem der Ansprüche 1 bis 4, wobei der Grad der Nichtübereinstimmung als ein Verhältnis einer Differenz zwischen der Drehzahl des Antriebsteils (454) und der Drehzahl des Abtriebsteils (455) zu der Drehzahl des Antriebsteils (454) oder der Drehzahl des Abtriebsteils (455) festgelegt wird und die ersten und zweiten Werte (U₁, U₂) jeweils vorbestimmte Werte des Verhältnisses der Differenz zwischen den Drehzahlen des Antriebsteils (454) und des Abtriebsteiles (455) zu der Drehzahl des Antriebsteils (454) oder des Abtriebsteil (455) sind.

7. Kupplungssteuerungsvorrichtung nach einem der Ansprüche 1 bis 6, wobei der erste Wert (R₁, U₁) und der zweite Wert (R₂, U₂) im Wesentlichen identisch sind.

8. Kupplungssteuerungsvorrichtung nach einem der Ansprüche 1 bis 7, wobei eine Anzeige (15) konfiguriert ist, eine Anzeige zu geben, dass die Steuerung der Betätigervorrichtung (60) durch das Steuerteil (90) gestoppt ist, und, vorzugsweise, die Anzeige (15) konfiguriert ist, das Anzeigen selbst dann fortzusetzen, wenn die Steuerung der Betätigervorrichtung (60) durch das Steuerteil (90) nicht wieder aufgenommen wird.

9. Kupplungssteuerungsvorrichtung nach Anspruch 8, wobei die Anzeige (15) konfiguriert ist, eine unterschiedliche Anzeige zu machen, wenn die Steuerung der Betätigervorrichtung (60) durch das Steuerteil (90) innerhalb einer vorbestimmten Zeitdauer wieder aufgenommen wird, von derjenigen, wenn die Steuerung der Betätigervorrichtung (60) durch das Steuerteil (90) nicht wieder aufgenommen wird.

10. Fahrzeug, aufweisend eine Brennkraftmaschine (45), eine Kupplungsvorrichtung (44), enthaltend ein Antriebsteil (454), konfiguriert, sich durch ein Drehmoment, erzeugt durch eine Brennkraftmaschine (45), zu drehen, und ein Abtriebsteil (455), konfiguriert, sich entsprechend zu der Drehung des Antriebsteils (454) zu drehen, und eine Kupplungssteuerungsvorrichtung (50) nach einem der Ansprüche 1 bis 9, konfiguriert, die Kupplungsvorrichtung (44) zu steuern.

11. Verfahren zum Steuern einer Kupplungsvorrichtung (44), enthaltend ein Antriebsteil (454), konfiguriert, sich durch ein Drehmoment, erzeugt durch eine Brennkraftmaschine (45), zu drehen, und ein Abtriebsteil (455), konfiguriert, sich entsprechend zu der Drehung des Antriebsteils (454) zu drehen, wobei das Verfahren die folgenden Schritte aufweist:
Schalten der Kupplungsvorrichtung (44) in einen Eingriffszustand oder einen Nicht- Eingriffszustand mittels einer Betätigervorrichtung (60); und
Steuern der Betätigervorrichtung (60) derart, dass die Betätigervorrichtung (60) eine Anweisung akzeptiert, die Kupplungsvorrichtung (44) zu schalten, Schalten der Kupplungsvorrichtung (44) aus dem Eingriffszustand in den Nicht- Eingriffszustand und Schalten dann der Kupplungsvorrichtung (44) aus dem Nicht- Eingriffszustand in den Eingriffszustand, Festlegen, ob ein Grad der Nichtübereinstimmung zwischen der Drehzahl des Antriebsteils (454) und der Drehzahl des Abtriebsteils (455) ein vorbestimmter erster Wert (R₁, U₁) oder größer ist, wenn die Kupplungsvorrichtung (44) in dem Eingriffszustand ist, und Stoppen der Steuerung der Betätigervorrichtung (60), so dass die Kupplungsvorrichtung (44) in dem Eingriffszustand, unabhängig von der Anweisung die Kupplungsvorrichtung (44) zu schalten, beibehalten wird, wenn das Bestimmen des Grades der Nichtübereinstimmung zwischen der Drehzahl des Antriebsteils (454) und der Drehzahl des Abtriebsteils (455) den vorbestimmten ersten Wert (R₁, U₁) ergibt oder größer ist,
und Wiederaufnehmen der Steuerung der Betätigervorrichtung (60), die der Anweisung die Kupplungsvorrichtung (44) zu schalten, folgt, wenn festgestellt wird, dass der Grad der Nichtübereinstimmung kleiner ist, als ein vorbestimmter zweiter Wert (R₂, U₂) und zwar innerhalb einer vorbestimmten Zeitdauer (t₂ -t₁), die vergangen ist, seitdem die Steuerung der Betätigervorrichtung (60) gestoppt wurde.

12. Verfahren nach Anspruch 11, wobei der erste Wert (R₁, U₁) und der zweite Wert (R₂, U₂) in Abhängigkeit von der Gangposition eines Getriebes (43) verschieden sind.

13. Verfahren nach Anspruch 11 oder 12, wobei der Grad der Nichtübereinstimmung als Differenz zwischen der Drehzahl des Antriebsteils (454) und der Drehzahl des Abtriebsteils (455) festgelegt wird und der erste und zweite Wert (R₁, R₂) jeweils vorbestimmte Werte der Differenz zwischen den Drehzahlen des Antriebsteils (454) und des Abtriebsteils (455) sind.

14. Verfahren nach Anspruch 11 oder 12, wobei der Grad der Nichtübereinstimmung als ein Verhältnis zwischen der Drehzahl des Antriebsteils (454) und der Drehzahl des Abtriebsteils (455) zu der Drehzahl des Antriebsteils (454) oder der Drehzahl des Abtriebsteils (455) festgelegt wird und die ersten und zweiten Werte (U₁, U₂) jeweils vorbestimmte Werte des Verhältnisses der Differenz zwischen den Drehzahlen des Antriebsteils (454) und des Abtriebsteiles (455) zu der Drehzahl des Antriebsteils (454) oder des Abtriebsteil (455) sind.

15. Verfahren nach einem der Ansprüche 11 bis 14, wobei der erste Wert (R₁, U₁) und der zweite Wert (R₂, U₂) im Wesentlichen identisch sind.

## Revendications

1. Appareil de commande d'embrayage pour commander un dispositif d'embrayage (44) comprenant un élément d'entraînement (454) conçu pour tourner suivant un couple produit par un moteur (45), et un élément entraîné (455) conçu pour tourner en fonction de la rotation de l'élément d'entraînement (454), l'appareil de commande d'embrayage (50) comprenant :
un dispositif d'actionnement (60) conçu pour faire passer le dispositif d'embrayage (44) dans un état accouplé et dans un état désaccouplé ; et
un élément de commande (90) conçu pour commander le dispositif d'actionnement (60) de telle sorte que le dispositif d'actionnement (60) accepte une instruction pour manoeuvrer le dispositif d'embrayage (44) et fait passer celui-ci de l'état accouplé à l'état désaccouplé puis de l'état désaccouplé à l'état accouplé, étant précisé que l'élément de commande (90) est conçu pour déterminer si un degré de non coïncidence entre la vitesse de rotation de l'élément d'entraînement (454) et la vitesse de rotation de l'élément entraîné (455) est une première valeur prédéterminée (R₁, U₁) ou plus quand le dispositif d'embrayage (44) est dans l'état accouplé, et pour arrêter de commander le dispositif d'actionnement (60) de telle sorte que le dispositif d'embrayage (44) est maintenu dans cet état accouplé indépendamment de l'instruction de manoeuvrer le dispositif d'embrayage (44) quand il est déterminé que le degré de non coïncidence entre la vitesse de rotation de l'élément d'entraînement (454) et la vitesse de rotation de l'élément entraîné (455) est la première valeur prédéterminée (R₁, U₁) ou plus, et pour reprendre la commande du dispositif d'actionnement (60) qui répond à l'instruction de manoeuvrer le dispositif d'embrayage (44) quand il est déterminé que le degré de non coïncidence devient inférieur à une seconde valeur prédéterminée (R₂, U₂) à l' intérieur d'une durée (t₂-t₁) écoulée depuis que la commande du dispositif d'actionnement (60) a été arrêtée.

2. Appareil de commande d'embrayage selon la revendication 1, étant précisé qu'un détecteur de vitesse de rotation (31) est conçu pour détecter une vitesse de rotation du moteur (45) d'un véhicule (1), qu'un détecteur de vitesse de circulation (33) est conçu pour détecter une vitesse de circulation du véhicule (1), et qu'un détecteur de position d'engrenage (32) est conçu pour détecter une position d'engrenage d'une transmission (43) apte à adopter plusieurs positions d'engrenage, et que l'élément de commande (90) est conçu pour calculer la vitesse de rotation de l'élément d'entraînement (454) sur la base de la vitesse de rotation du moteur (45) détectée par le détecteur de vitesse de rotation (31), pour calculer la vitesse de rotation de l'élément entraîné (455) sur la base de la vitesse de circulation du véhicule (1) détectée par le détecteur de vitesse de circulation (33) et de la position d'engrenage détectée par le détecteur de position d'engrenage (32), et pour calculer le degré de non coïncidence à partir la vitesse de rotation calculée de l'élément d'entraînement (454) et de la vitesse de rotation calculée de l'élément entraîné (455).

3. Appareil de commande d'embrayage selon la revendication 1, étant précisé que la première valeur (R₁, U₁) et la seconde valeur (R₂, U₂) diffèrent en fonction de la position d'engrenage de la transmission (43).

4. Appareil de commande d'embrayage selon l'une quelconque des revendications 1 à 3, étant précisé qu'un détecteur de degré d'actionnement (38) est conçu pour détecter un degré d'actionnement du dispositif d'actionnement (60), et que de préférence l'élément de commande (90) est conçu pour déterminer si le dispositif d'embrayage (44) est ou non dans l'état accouplé, sur la base du degré d'actionnement détecté par le détecteur de degré d'actionnement (38).

5. Appareil de commande d'embrayage selon l'une quelconque des revendications 1 à 4, étant précisé que le degré de non coïncidence est déterminé comme différence entre la vitesse de rotation de l'élément d'entraînement (454) et la vitesse de rotation de l'élément entraîné (455), et que les première et seconde valeurs (R₁, R₂) sont des valeurs déterminées respectivement de la différence entre les vitesses de rotation de l'élément d'entraînement (454) et de l'élément entraîné (455).

6. Appareil de commande d'embrayage selon l'une quelconque des revendications 1 à 4, étant précisé que le degré de non coïncidence est déterminé comme rapport d'une différence entre la vitesse de rotation de l'élément d'entraînement (454) et la vitesse de rotation de l'élément entraîné (455) sur la vitesse de rotation de l'élément d'entraînement (454) ou de la vitesse de rotation de l'élément entraîné (455), et que les première et seconde valeurs (U₁, U₂) sont des valeurs prédéterminées respectivement du rapport de la différence entre les vitesses de rotation de l'élément d'entraînement (454) et l'élément entraîné (455) sur la vitesse de rotation de l'élément d'entraînement (454) ou de l'élément entraîné (455).

7. Appareil de commande d'embrayage selon l'une quelconque des revendications 1 à 6, étant précisé que la première valeur (R₁, U₁) et la seconde valeur (R₂, U₂) sont quasiment identiques.

8. Appareil de commande d'embrayage selon l'une quelconque des revendications 1 à 7, étant précisé qu'un dispositif de notification (15) est conçu pour notifier que la commande du dispositif d'actionnement (60) par l'élément de commande (90) est arrêtée, et que de préférence le dispositif d'avertissement (15) est conçu pour continuer la notification même quand la commande du dispositif d'actionnement (60) par l'élément de commande (90) n'a pas repris.

9. Appareil de commande d'embrayage selon la revendication 8, étant précisé que le dispositif de notification (15) est conçu pour faire une notification différente quand la commande du dispositif d'actionnement (60) par l'élément de commande (90) reprend au bout d'une durée prédéterminée, et quand la commande du dispositif d'actionnement (60) par l'élément de commande (90) ne reprend pas.

10. Véhicule comprenant un moteur (45), un dispositif d'embrayage (44) contenant un élément d'entraînement (454) conçu pour tourner suivant un couple produit par le moteur (45) et un élément entraîné (455) conçu pour tourner en fonction de la rotation de l'élément d'entraînement (454), et un appareil de commande d'embrayage (50) selon l'une quelconque des revendications 1 à 9 conçu pour commander le dispositif d'embrayage (44).

11. Procédé pour commander un dispositif d'embrayage (44) contenant un élément d'entraînement (454) conçu pour tourner suivant un couple produit par un moteur (45) et un élément entraîné (455) conçu pour tourner en fonction de la rotation de l'élément d'entraînement (454), le procédé comprenant les étapes qui consistent :
à faire passer le dispositif d'embrayage (44) à un état accouplé et à un état désaccouplé à l'aide d'un dispositif d'actionnement (60) ; et
à commander le dispositif d'actionnement (60) de telle sorte que le dispositif d'actionnement (60) accepte une instruction pour manoeuvrer le dispositif d'embrayage (44) et fasse passer celui-ci de l'état accouplé à l'état désaccouplé puis de l'état désaccouplé à l'état accouplé, à déterminer si un degré de non coïncidence entre la vitesse de rotation de l'élément d'entraînement (454) et la vitesse de rotation de l'élément entraîné (455) est une première valeur prédéterminée (R₁, U₁) ou plus quand le dispositif d'embrayage (44) est dans l'état accouplé, et à arrêter de commander le dispositif d'actionnement (60) de telle sorte que le dispositif d'embrayage (44) soit maintenu dans cet état accouplé indépendamment de l'instruction de manoeuvrer le dispositif d'embrayage (44) quand il est déterminé que le degré de non coïncidence entre la vitesse de rotation de l'élément d'entraînement (454) et la vitesse de rotation de l'élément entraîné (455) est la première valeur prédéterminée (R₁, U₁) ou plus, et à reprendre la commande du dispositif d'actionnement (60) qui répond à l'instruction de manoeuvrer le dispositif d'embrayage (44) quand il est déterminé que le degré de non coïncidence devient inférieur à une seconde valeur prédéterminée (R₂, U₂) à l' intérieur d'une durée (t₂-t₁) écoulée depuis que la commande du dispositif d'actionnement (60) a été arrêtée.

12. Procédé selon la revendication 11, étant précisé que la première valeur (R₁, U₁) et la seconde valeur (R₂, U₂) diffèrent en fonction d'une position d'engrenage d'une transmission (43).

13. Procédé selon la revendication 11 ou 12, étant précisé que le degré de non coïncidence est déterminé comme différence entre la vitesse de rotation de l'élément d'entraînement (454) et la vitesse de rotation de l'élément entraîné (455), et que les première et seconde valeurs (R₁, R₂) sont des valeurs déterminées respectivement de la différence entre les vitesses de rotation de l'élément d'entraînement (454) et de l'élément entraîné _(455).

14. Procédé selon la revendication 11 ou 12, étant précisé que le degré de non coïncidence est déterminé comme rapport d'une différence entre la valeur de rotation de l'élément d'entraînement (454) et la vitesse de rotation de l'élément entraîné (455) sur la vitesse de rotation de l'élément d'entraînement (454) ou la vitesse de rotation de l'élément entraîné (455), et que les première et seconde valeurs (U₁, U₂) sont des valeurs déterminées respectivement du rapport de la différence entre les vitesses de rotation de l'élément d'entraînement (454) et de l'élément entraîné (455) sur la vitesse de rotation de l'élément d'entraînement (454) ou de l'élément entraîné (455) .

15. Procédé selon l'une quelconque des revendications 11 à 14, étant précisé que la première valeur (R₁, U₁) et la seconde valeur (R₂, U₂) sont quasiment identiques.
